(19) Europäisches Patentamt
European Patent Office
Office européen des brevets

(11) **EP 4 306 218 A1**

(12) **EUROPEAN PATENT APPLICATION**

(43) Date of publication:
**17.01.2024 Bulletin 2024/03**

(21) Application number: **23184523.1**

(22) Date of filing: **10.07.2023**

(51) International Patent Classification (IPC):
**B02C 17/00** (2006.01)    **B02C 17/16** (2006.01)

(52) Cooperative Patent Classification (CPC):
**B02C 17/163; B02C 17/002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.07.2022 CN 202210811342**

(71) Applicants:
• **Hon Hai Precision Industry Co., Ltd.**
  **New Taipei City (TW)**
• **SolidEdge Solution Inc.**
  **Hsinchu 300 (TW)**

(72) Inventors:
• **CHEN, MAO-SUNG**
  **Hsinchu 300 (TW)**
• **CHEN, WEI-LUN**
  **Hsinchu 300 (TW)**
• **LAI, HONG-ZHENG**
  **Hsinchu 300 (TW)**
• **CHANG, TSENG-LUNG**
  **Hsinchu 300 (TW)**

(74) Representative: **Zaboliene, Reda**
**Metida**
**Business center Vertas**
**Gyneju str. 16**
**01109 Vilnius (LT)**

(54) **HORIZONTAL GRINDER ROTOR, GRINDING BEAD DRIVING DEVICE AND HORIZONTAL GRINDER**

(57)    A horizontal grinder rotor includes a grinding ring, multiple blades, and a center body. The grinding ring, the multiple blades and the central body are formed by 3D printing. The multiple blades are located between the grinding ring and the central body, and the multiple blades are arranged at intervals. The multiple blades are arranged in pairs and symmetrical with respect to the central body, and the horizontal grinder rotor further comprises one or more pins, the one or more pins are provided on at least one side of each of the multiple blades.

**Fig. 1**

EP 4 306 218 A1

## Description

## BACKGROUND

### 1. Technical Field

The present application relates to a horizontal grinder rotor, grinding bead driving device, and horizontal grinder.

### 2. Discussion of Related Art

In carbon-based negative active materials, a solid electrolyte interface (SEI layer) is formed on a surface of the carbon-based negative active material during an initial charge or discharge process (the activation process), which can lead to an initial irreversibility. At the same time, the SEI layer can continue to disintegrate and reform in a subsequent charge and discharge process, and the electrolyte can be consumed, thus a battery capacity and cycle performance are reduced. Although silicon exhibits a high gram capacity of 4200 mAh $g^{-1}$, a volume expansion rate of silicon can reach more than 300% with cycling, which can exacerbate problems caused by the formation of the SEI layer, by destroying electrode structures, increasing internal resistances of batteries and increasing electrolyte side reactions.

In order to overcome the problem of volume expansion, a nanization of materials can be provided to reduce the volume expansion. A conventional method of preparing nano-silicon particles is by grinding which the nano-silicon particles can be manufactured in large quantities at low cost. Horizontal grinders have wide applicability in the grinding method. However, during the process of silicon material processing, the thickening of the silicon slurry can make the horizontal grinders difficult to continue grinding the slurry, thereby not achieving optimal particle sizes.

At present, the horizontal grinders are generally disc structures or disc-like structures. Under a power drive, a main shaft and a disc of the horizontal grinder rotate at a high speed, grinding beads are driven to rotate, collide and roll materials to break particles. However, a liner velocity of the grinding beads in the area between the discs may be slow and the kinetic energy poor, and the grinding effect not good.

When the horizontal grinder is grinding silicon slurry, the solid content rate is difficult to exceed 10%. Since thickening of the silicon slurry cannot be avoided, the solid content rate and the filling rate of the grinding beads are limited. When the silicon slurry thickens, it is necessary to use rotors to continuously drive the slurry for grinding. Currently, the horizontal grinder generally uses zirconia or silicon carbide rotors. However, once the zirconia or silicon carbide rotors crack, the grinding processes stop. Due to the high price of the silicon-carbon composite material, if the rotors crack during processing, it can cause a large production loss. Although the rotors can be replaced regularly, the rotors are quite expensive, which can increase the cost of equipment spare parts.

Therefore, there is room for improvement in the art.

## BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as the limiting the scope. For one of ordinary skill in the art, other related drawings can also be obtained from these drawings without any creative work.

Implementations of the present technology will now be described, by way of embodiments, with reference to the attached figures, wherein:

FIG. 1 is a front view of a horizontal grinder rotor according to an embodiment of the present disclosure.
FIG. 2 is a right view of the horizontal grinder rotor.
FIG. 3 is a top view of the horizontal grinder rotor.
FIG. 4 is a front view of an embodiment of a grinding bead driving device of the horizontal grinder.
FIG. 5 is a left view of the grinding bead driving device of the horizontal grinder.
FIG. 6 is a particle size distribution diagram of silicon nanoparticles manufactured by the horizontal grinder of the present disclosure.

## DETAILED DESCRIPTION OF EXEMPLARY EMBODIMENTS

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

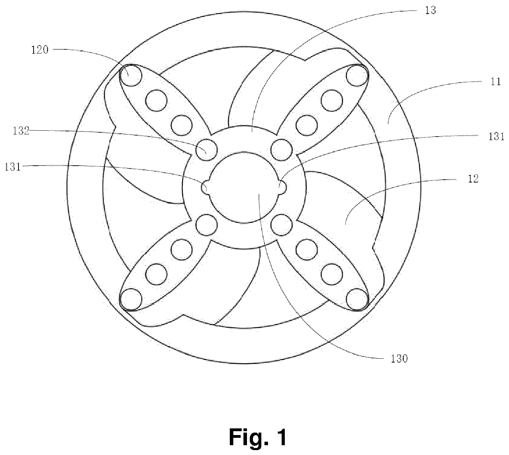

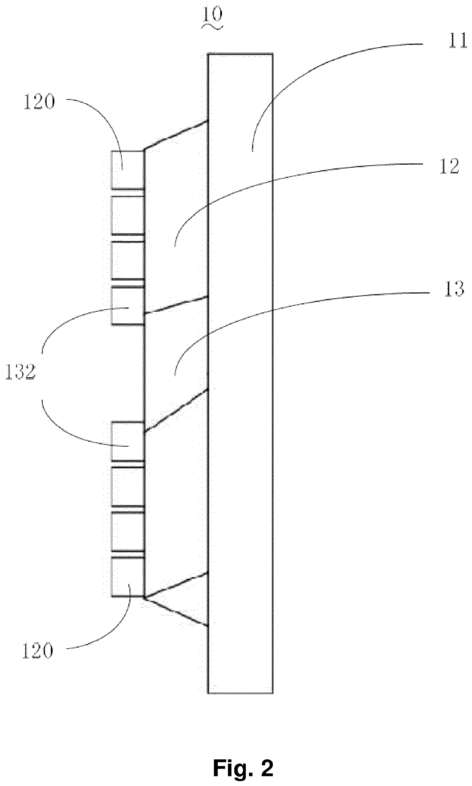

Referring to Fig. 1 to Fig. 3, a first embodiment of a horizontal grinder rotor 10 is provided. The horizontal grinder rotor 10 comprises a grinding ring 11, multiple blades 12 and a center body 13. The grinding ring 11, the multiple blades 12 and the central body 13 can be formed by 3D printing technology. The material of the horizontal grinder rotor 10 can be high-strength plastic steel material, artificial ceramics, carbon fiber, etc. Furthermore, a cladding layer (not shown) can be provided on the surface of the horizontal grinder rotor 10. The material of the cladding layer can be polyethylene terephthalate (PET), polytetrafluoroethylene (PTFE), polyvinylidene fluoride (PVDF), or polypropylene.

The multiple blades 12 are located between the grinding ring 11 and the central body 13. Each blade of the multiple blades 12 is arranged at intervals, thus the structure of the multiple blades 12 is hollow. Each two blades of the multiple blades 12 are in pairs, and the two blades in pairs are symmetrical with respect to the central body 13. A number of the blades of the multiple blades 12 is an even number, which can be two, four, six, eight or the like. A through hole 130 is defined in the center of the central body 13, and two keyways 131 are oppositely arranged on an inner wall of the through hole 130. The through hole 130 and the two keyways 131 are configured to mount the horizontal grinder rotor 10 to a grinder shaft. One or more pins 120 are arranged on one or both sides of each blade of the multiple blades 12. The shape of the pin 120 is not limited, it can be a cylindrical protrusion, or other shapes. The number of the pins 120 can be adjusted according to the strength of the blades and the size and the volume of a horizontal grinder. There is a plurality of latches 132 arranging on the central body 13 close to the blades 12. Each latch of the plurality of latches 132 is arranged on a part of the central body 13 close to each blade 12. The plurality of latches 132 are configured to mount the horizontal grinder rotor 10 to another rotor.

In one embodiment, there are four blades in the multiple blades 12, and there are three pins 120 arranged on each blade of the multiple blades 12. In one embodiment, the pin 120 is a cylindrical protrusion. In one embodiment, the material of the cladding layer is PTEE, and the material can avoid production pollution.

In the horizontal grinder rotor 10, the interval arrangement of the multiple blades 12 can increase the agitation ability of high solid content slurries. There are pins on the blades, which can increase the effective collision probability of grinding beads and increase their linear speed. The design of the multiple blades 12 symmetrically arranged in pairs relative to the center body 13 can be applied to vortex waterwheel, which can increase the fluidity and vortex of the slurries when the viscosity rises. Therefore, the horizontal grinder rotor 10 can grind silicon materials with a solid content greater than 15%. The horizontal grinder rotor 10 can be printed with 3D printing technology, and then coated with a cladding layer, which can prolong the life. Even if a part of the cladding layer peels off, since the silicon carbon material still need to be sintered, the exfoliation of the coating material does not affect the characteristics of the silicon carbon material, thus the horizontal grinder rotor 10 can be replaced regularly to maintain production quality. The material of the horizontal grinder rotor 10 can be high-strength plastic steel material (such as ABS), artificial ceramics, carbon fiber, which can withstand a speed of more than 2600 rpm.

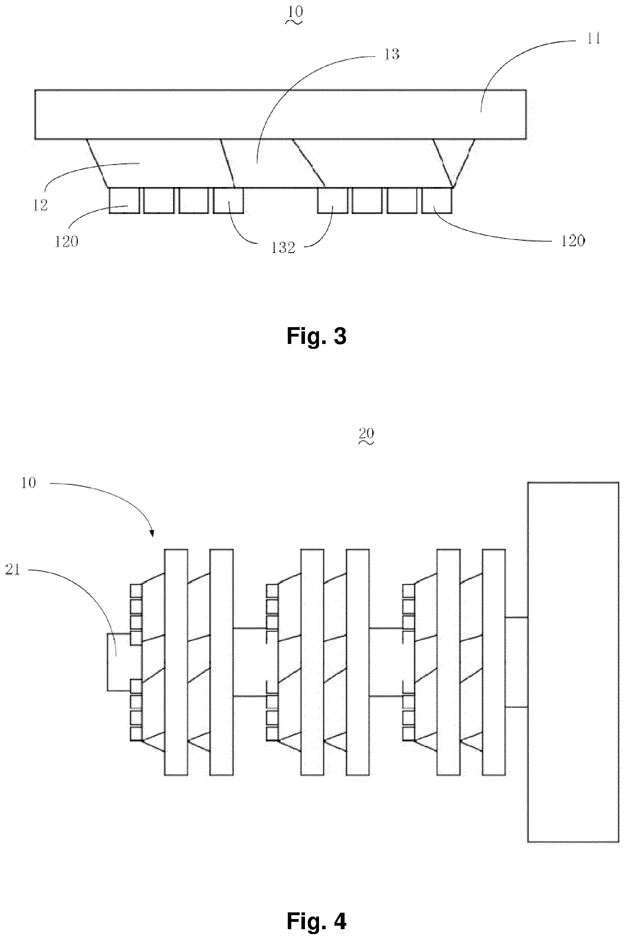

Referring to Fig. 4 to Fig. 5, a second embodiment of a grinding bead driving device 20 is provided. The grinding bead driving device 20 comprises a rotating shaft 21 and multiple groups of the horizontal grinder rotors 10, and multiple groups of the horizontal grinder rotors 10 are arranged at intervals on the rotating shaft 21. The multiple groups of the horizontal grinder rotors 10 comprises at least two groups of the horizontal grinder rotors 10, each group of the horizontal grinder rotors 10 comprises at least two horizontal grinder rotors 10. Two key slots are oppositely arranged on the rotating shaft 21. The two key slots of the rotating shaft 21 corresponds to the two keyways 131 of the horizontal grinder rotors 10. The horizontal grinder rotors 10 can be mounted on the rotating shaft 21 by a key. The horizontal grinder rotors 10 can also be mounted on the rotating shaft 21 by other methods.

In one embodiment, there are three groups of horizontal grinder rotors 10 mounted on the rotating shaft 21, each group of horizontal grinder rotors 10 is arranged at intervals, each group of horizontal grinder rotors comprises two horizontal grinder rotors 10, and the two horizontal grinder rotors 10 are fixed by latches 132. In the projection of the two horizontal grinder rotors 10, the blade of one horizontal grinder rotor is located between two adjacent blades of the other horizontal grinder rotor 10. That is, the blades 12 of the two horizontal grinder rotors 10 are arranged at equal intervals. The pins 120 are only arranged on one side of the blades 12 of each horizontal grinder rotor 10.

The multiple groups of the horizontal grinder rotors 10 comprises at least two groups of the horizontal grinder rotors 10, each group of the horizontal grinder rotors 10 comprises at least two horizontal grinder rotors 10. And the two horizontal grinder rotors 10 are fixed by latches 132 or other methods. The pins can only locate on one side of the blades of each horizontal grinder rotor.

Furthermore, if the interference can be avoided, it is better to set pins on both sides of each blade.

A third embodiment of a horizontal grinder (not shown) is provided. The horizontal grinder comprises a grinding cylinder and the grinding bead driving device 20. The grinding cylinder defines an inlet and an outlet. The grinding bead driving device 20 is installed in the grinding cylinder. The rotation direction of the grinding cylinder is opposite to the rotation direction of the rotating shaft 21 in the grinding bead driving device 20. In one embodiment, the pins are only located on the horizontal grinder rotor close to the outlet, and the pins are respectively arranged on a side of the horizontal grinder rotor close to the outlet.

Since the 3D printing time of each horizontal grinder rotor does not exceed twenty-four hours, the cost of the horizontal grinder rotor 10 can be greatly reduced.

A fourth embodiment of a method of making a silicon-carbon composite material is provided. The method of making a silicon-carbon composite material is carried out in the above horizontal grinder. The method comprises following steps: adding grinding beads to the horizontal grinder; adding semiconductor-grade silicon as a silicon source, wherein the size of the semiconductor-grade silicon is greater than ten microns; adding a protective solvent, wherein the protective solvent can be an alcohol such as diethylene glycol or an oil; then grinding the semiconductor-grade silicon to obtain nanoscale silicon particles, wherein the solid content of the nanoscale silicon particles is greater than 15%; then adding carbon sources for homogeneous coating on a surface of the nanoscale silicon particles to obtain the nanoscale silicon-carbon composite material, wherein the carbon sources can be graphite, graphene, carbon black, pitch, carbon nanotubes, etc. Furthermore, a polymer material can be introduced into the carbon sources to increase the viscosity of the carbon sources and make it easy for the carbon sources to coat the nanoscale silicon particles. The polymer material can be polyvinylpyrrolidone (PVP), N-allyl-(2-ethyl xanthate) propionamide (NAPA), dimethylformamide (DMF), or carboxymethyl cellulose (CMC) etc.

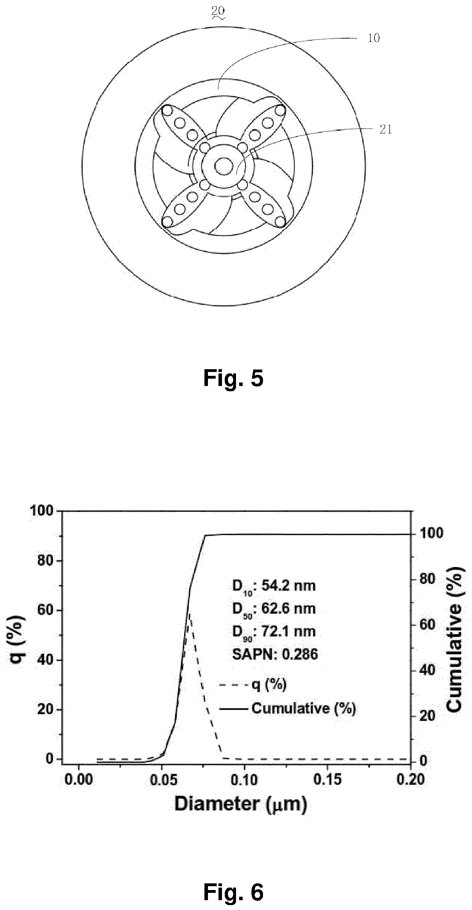

Referring to Fig.6, a horizontal axis represents the particle size, a right vertical axis represents a cumulative percentage, and a left vertical axis represents a particle content of the corresponding particle size. Figure 6 shows that a horizontal grinder can obtain silicon nanoparticles with concentrated particle size, with a span of less than 0.8 calculated by the following formula.

$$SPAN = \frac{D_{90} - D_{10}}{D_{50}}$$

The method of making a silicon-carbon composite material can realize the self-assembly stacking of silicon-carbon composite materials through grinding, which can improve the electrochemical of the silicon-carbon composite materials. The grinding bead driving device can evenly stir the slurry, increase the frequency of effective collision of grinding beads, and improve the grinding efficiency. While the specific surface area of nano-silicon continues to increase, the grinding bead driving device can still maintain the smoothness of the slurry circulation, and make the silicon particle size reach a set particle size. At the same time, the rotor can be obtained with 3D printing technology. Therefore, the rotor can be used as a consumable for regular replacement, which is beneficial to reduce inventory costs.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including, the full extent established by the broad general meaning of the terms used in the claims.

The above embodiments are only used to illustrate the technical solutions of the present application rather than limitations. Although the present application has been described in detail with reference to the above preferred embodiments, one of ordinary skill in the art should understand that the technical solutions of the present application may be modified or equivalently replaced without departing from the spirit and scope of the technical solutions of the present application.

**Claims**

1. A horizontal grinder rotor comprises:

    a grinding ring;
    multiple blades; and
    a center body;
    wherein the grinding ring, the multiple blades and the central body are formed by 3D printing, the multiple blades are located between the grinding ring and the central body, the multiple blades are arranged at intervals, the multiple blades are arranged in pairs and symmetrical with respect to the central body, the horizontal grinder rotor further comprises one or more pins, the one or more pins are provided on at least one side of each of the multiple blades.

2. The horizontal grinder rotor according to claim 1, further comprising a cladding layer on a surface of the horizontal grinder rotor.

3. The horizontal grinder rotor according to claim 2, wherein a material of the cladding layer is selected from a group consisting of polyethylene terephthalate, polytetrafluoroethylene, polyvinylidene fluoride, and polypropylene.

4. The horizontal grinder rotor according to any one of claims 1-3, wherein a shape of the pins is a cylindrical protrusion.

5. The horizontal grinder rotor according to any one of claims 1-3, wherein the central body is provided with a through hole, and at least one keyway is formed on an inner wall of the through hole.

6. The horizontal grinder rotor according to claim 1, wherein a material of the horizontal grinder rotor is selected from a group consisting of plastic steel material, artificial ceramics, and carbon fiber.

7. The horizontal grinder rotor according to any one of claims 1-6, further comprising a plurality of latches, and each of latches is arranged on a part of the central body close to each of the multiple blades.

8. The horizontal grinder rotor according to claim 1, wherein a number of multiple blades is an even number.

9. A grinding bead driving device comprises a rotating shaft and multiple groups of horizontal grinder rotors according to any one of claims 1-8, wherein the multiple groups of horizontal grinder rotors are arranged at intervals on the rotating shaft, each group of horizontal grinder rotors comprises at least two horizontal grinder rotors.

10. The grinding bead driving device according to claim 9, wherein each of the multiple blades of each group of horizontal grinder rotors is arranged at equal intervals.

11. The grinding bead driving device according to any one of claims 9-10, wherein each of the horizontal grinder rotor is mounted on the rotating shaft by a key.

12. The grinding bead driving device according to any one of claims 9-10, wherein two adjacent horizontal grinder rotors are fixed by latches.

13. A horizontal grinder comprises:
a grinding cylinder and a grinding bead driving device, wherein the grinding bead driving device is installed in the grinding cylinder, the grinding bead driving device comprises a rotating shaft and multiple groups of horizontal grinder rotors according to claims 1-12, wherein a first rotation direction of the grinding cylinder is opposite to a second rotation direction of the rotating shaft of the grinding bead driving device.

14. The horizontal grinder according to claim 13, wherein the multiple groups of horizontal grinder rotors comprise at least two groups of horizontal grinder rotors, each group of horizontal grinder rotors comprises at least two horizontal grinder rotors.

15. The horizontal grinder according to claim 13, wherein the grinding cylinder is provided with an inlet and an outlet, and the pins are respectively arranged on a side of the horizontal grinder rotor close to the outlet.

**Fig. 1**

**Fig. 2**

**Fig. 3**

**Fig. 4**

**Fig. 5**

**Fig. 6**

Europäisches
Patentamt

European
Patent Office

Office européen
des brevets

# EUROPEAN SEARCH REPORT

Application Number

EP 23 18 4523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/209618 A1 (SNEERINGER JOHN R [US] ET AL) 13 November 2003 (2003-11-13) * claims 1,2; figures 1-8 * | 1-15 | INV. B02C17/00 B02C17/16 |
| A | DE 21 40 199 B1 (ENGELS, KASPAR) 18 January 1973 (1973-01-18) * claims 1,4; figures 1,2 * | 1-15 | |

TECHNICAL FIELDS
SEARCHED      (IPC)

B02C

The present search report has been drawn up for all claims

| Place of search | Date of completion of the search | Examiner |
|---|---|---|
| Munich | 30 November 2023 | Laurim, Jana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4523

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| US 2003209618 | A1 | 13-11-2003 | AT | E311255 T1 | 15-12-2005 |
| | | | AU | 2932401 A | 24-07-2001 |
| | | | CA | 2397157 A1 | 19-07-2001 |
| | | | CN | 1400925 A | 05-03-2003 |
| | | | DE | 60115392 T2 | 17-08-2006 |
| | | | EP | 1259327 A1 | 27-11-2002 |
| | | | ES | 2254438 T3 | 16-06-2006 |
| | | | JP | 2003519569 A | 24-06-2003 |
| | | | KR | 20020083148 A | 01-11-2002 |
| | | | MX | PA02006790 A | 10-09-2004 |
| | | | US | 2003209618 A1 | 13-11-2003 |
| | | | US | 2005011976 A1 | 20-01-2005 |
| | | | WO | 0151212 A1 | 19-07-2001 |
| DE 2140199 | B1 | 18-01-1973 | NONE | | |

EPO FORM P0459

For more details about this annex : see Official Journal of the European Patent Office, No. 12/82